## Europäisches Patentamt
## European Patent Office
## Office européen des brevets

(19)

(11) Publication number: **0 015 139**
**B1**

(12) **EUROPEAN PATENT SPECIFICATION**

(45) Date of publication of patent specification: **03.03.82**

(51) Int. Cl.³: **G 02 F 1/315**

(21) Application number: **80300480.3**

(22) Date of filing: **20.02.80**

(54) Electro-optical switching matrix.

(30) Priority: **21.02.79 US 13095**

(43) Date of publication of application:
**03.09.80 Bulletin 80/18**

(45) Publication of the grant of the patent:
**03.03.82 Bulletin 82/9**

(84) Designated Contracting States:
**DE GB**

(56) References cited:
**FR - A - 2 263 569**

**APPLIED OPTICS, vol. 12, no. 10 October 1973
New York US
R. A. KASHNOW and C. R. STEIN: "Totoal
reflection liquid-crystal electrooptic device",
pages 2309—11**

**SOV. JOURNAL OF QUANTUM ELECTRONICS
Vol. 7, September 1977
New York US
S. KH. SUINOV et al: "Deflector based on
frustrated total internal reflection of light", pages
1146—7**

(73) Proprietor: **SPERRY CORPORATION
1290 Avenue of the Americas
New York, N.Y. 10019 (US)**

(72) Inventor: **Soref, Richard Allan
45, Westgate Road Newton Centre
Massachusetts 02159 (US)**

(74) Representative: **Michaels, Peter Albert
SPERRY UNIVAC Patent & Licensing Services
M.S. S2 W1 SPERRY UNIVAC CENTRE
London NW10 8LS (GB)**

# Electro-optical switching matrix

The invention relates to electrooptical devices for switching unpolarized or polarized optical signals between input and output multimode single strand fibre optical guides, and it is an object of the invention to provide switching devices of this kind.

Optical switching devices employing electrooptical materials such as $LiNbO_3$ or $LiTaO_3$ are known in the prior art. While some degree of success has been achieved in devising such electric field switched devices in matrix form, the use of the solid crystalline materials imposes serious limitations. Generally, the size of available $LiNbO_3$ crystals is seriously limited, and there is no apparent opportunity for overcoming this size limitation without extreme expense. No other solid electrooptical materials are known to have large electrooptic coefficients and otherwise suitable properties. With array substrate sizes limited in this manner, the number of switch elements that may be employed in matrix switches constructed of such materials is severely limited.

The technical paper "Nematic Crystal Digital Light Deflector" by G. Labrunie and S. Valette, beginning on page 1802 of Volume 13, number 8 in the August 1974 issue of Applied Optics describes a light deflector according to the first part of claim 1 in which a liquid crystal layer is disposed between transparent electrodes on the adjacent faces of a pair of cooperating prisms. A light ray entering an input face of a first of the prisms is incident to the liquid crystal layer at an angle of 71°. The light ray therefore enters the first prism perpendicular to its input face, the angles of the prism being selected also to be about 71°. The transmitted light beam normally passes through an opposite exit face of the second prism at right angles thereto; when an electric field is imposed across the liquid crystal film, the input beam is totally internally reflected at the layer to pass through the opposite exit face of the first prism and at right angles thereto.

The invention applies a similar principle to provide electrooptical matrix switches for selectively switching pluralities of optical signals between collimating input and decollimating output fibre light guides of the multimode, single strand kind. Switching is accomplished by selective electric field excitation of a positive or of a negative anisotrophy liquid crystal medium.

The swtich structure comprises an assembly of parallel-sided prisms of trapezoidal section having end-faces inclined at an angle $\theta$ approximating the critical angle, the liquid crystal medium being contained between the parallel faces of consecutive prisms, and forming one, two or more active regions, each provided with electrodes for application of the switching voltages. The complete configuration may have one or more degrees of geometric symmetry, or none at all. All the prisms and all the liquid crystal layers may cooperate, for example, in directing light signals from three inputs to selected ones of three outputs, while half of the prisms cooperate with light absorbers for removing unwanted scattered light.

In generally symmetric matrices for positive anisotropy fluids according to the invention, each liquid crystal layer contains active regions in which a liquid crystal medium is disposed, separated by regions which may have the same fixed optical index of refraction as the material of the prism bodies and be used for light transmission or may be provided with fixed mirrors forbidding such transmission. The disposal of input, output, and absorber elements may again be generally similar to that for negative anisotropy materials. Again, pairs of prisms of similar size and geometry are normally employed. Unsymmetric matrices for use with positive anisotropy liquid crystal media are also achieved. Multiple input-multiple output systems may be achieved with a single, multiple-active-region, layer of liquid crystal material using cooperative reflectors or with two such layers each having active regions interposed with inactive transmission regions. Other configurations may be readily visualized.

Accordingly, the invention provides matrix switching of unpolarized or polarized light with low insertion loss, low cross-talk, low control voltages, and simple in-out optical fibre coupling elements in configurations readily permitting expansion to relatively large arrays. Similar sets of parts are employed in such a way that manufacture of parts and assembly of the product is economical. For example, the expensive requirement of very high quality optical polishing is considerably relaxed. There are no air gaps in the structure and no moving parts and stray light is minimized. The switch matrices may be driven by low voltage, low current transistor circuits and are fail safe since there is continuous maximum optical transmission when the electrical switching power fails. The switch matrices are bidirectional and achromatic in operation.

The switching matrices are versatile, since a variety of locations for input and output fibres and for absorbers may be selected even after the glass structure is assembled. Depending upon the selected fibre connection system, the multimode fibres are easily relocated with respect to the various fixed optical parts and the fibre light is advantageously collimated or decollimated. There are no critical adjustments of fibre position nor of prism position; conveniently, the fibres are directly butt-coupled at perpendicular incidence. The choice of the incidence angle and, consequently, of the prism

angle $\theta_p$ is not highly critical.

The invention is particularly adaptable for use in multimode optical signal systems and thus benefits because of the desirable characteristics of such systems. Experience in guided optical data communication methods, while earlier intensely concerned with the fibre optic bundle and with single mode integrated optical techniques, now leads to the conviction that an intermediate approach, the multimode, single optical fibre technology, can be most successfully applied to a wide variety of communication problems, especially where moderate band width and moderate distances are involved. Fabrication of passive interconnectors is simple and the packing fraction losses characteristic of the fibre bundle are eliminated. Simple light sources exist easily capable of coupling considerable power into available multiple mode, single fibre guides, and quite adequate photo-detector devices for detecting the flow of light through such single fibre guides are also available.

The invention will now be further described with reference to the accompanying drawings, in which

Figure 1 is a fragmentary cross section view through a liquid crystal film.

Figures 2A and 2B are simplified diagrams showing molecular orientation in the liquid crystal material.

Figures 3A, 3B, 4A, 4B, 5A, 5B, 6A, 6B and 6C are graphs referred to in the explanation.

Figure 7 is a table illustrating properties of liquid crystal materials.

Figure 8 is a cross-section of a generally symmetric embodiment of the invention.

Figure 9 is a second cross-section of the structure of Figure 8.

Figures 10 and 11 are end views, partly in cross section, of two types of unit switches.

Figures 12A, 12B show end views, partly in section, of a second embodiment of the invention alternatively useful with one or the other of the unit switches of Figures 10 and 11.

Figures 13 and 14 show end views, partly in section, of asymmetric embodiments of the invention.

Figures 15, 16A, 16B, 16C, and 17 show end views of further forms of switching matrix.

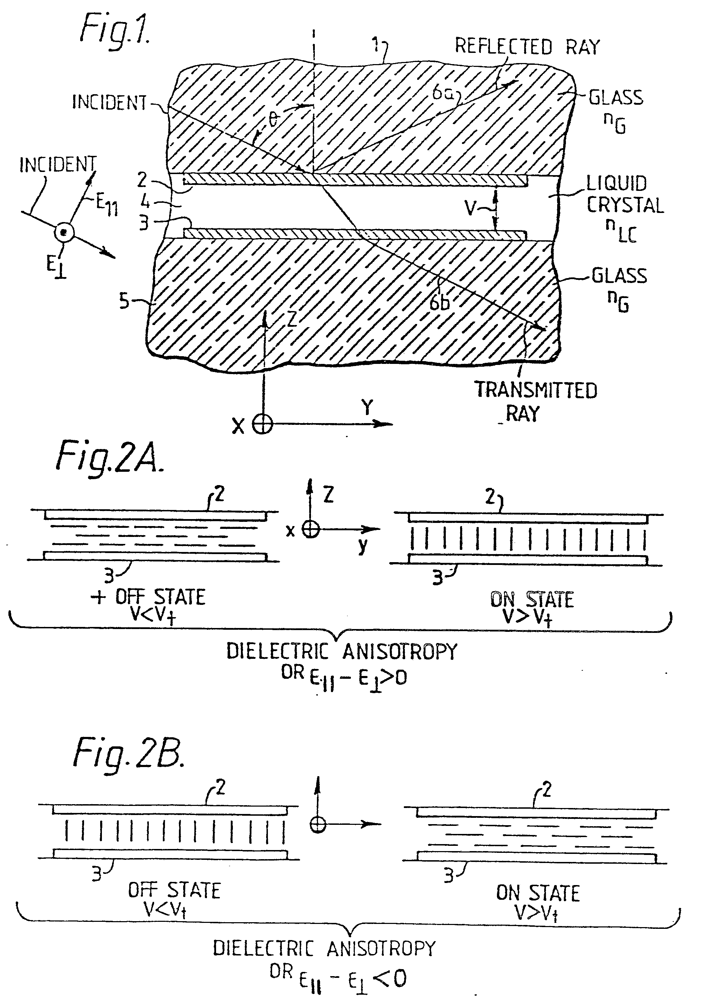

Figure 1 is a fragmentary cross-section of part of two glass prisms, 1 and 5, between which is a thin liquid crystal film 4. The optical refractive index $n_g$ of the glass prisms 1 and 5 is selected to be greater than the ordinary refractive index $n_o$ of the thin liquid crystal 4. The value of $n_g$ may be equal to, slightly less than, or slightly greater than the extraordinary index $n_e$ of the liquid crystal medium of film 4. The opposed flat, polished surfaces of the glass prisms 1, 5 at the interfaces with the liquid crystal film 4 are supplied with thin optically transparent, sputtered electrically conducting layers 2, 3 preferably of indium-tin oxide prepared in the usual manner in thicknesses of 20+0 30 mm (200 to 300 Angstroms). Thin films of other materials, including chromium, have also been used to form electrodes in liquid crystal display cells. Microgrooves (not shown) may be formed in the conventional way on exposed surfaces of an insulator material such as SiO or MgF$_2$ by 60° angle-deposition of 10 mm (100 A) of SiO or MgF$_2$ on the electrode films 2, 3 so as to enhance uniform homogeneous ordering of the long liquid crystal molecules, especially for positive anisotropy liquid crystal materials, in a preferred direction in the absence of the electric field V. A small amount of a conventional surfactant material or a 50 mm (500 A) coating of CaF$_2$ may be used for the homeotropy desired in negative liquids. When a control electric field V is applied between the conductive electrodes 2, 3, the effect of the presence of the field in the liquid crystal medium is to re-order the long axes of most of the liquid crystals, except for a small portion of the molecules at surfaces of films 2, 3. The reorientation of the molecules causes the liquid crystal film to present a new refractive index to a light ray or beam 6.

A control signal voltage V applied to the electrode layers 2, 3 causes the incoming collimated light beam, incident at an acute angle $\theta$ at electrode 2, either to be reflected as light beam 6a, or to traverse liquid crystal film 4 as light beam 6b. The critical angle $\theta_c$ for total internal reflection of incident light beam 6 is governed by the ratio $n_g/n_{LC}$ and depends both upon the applied field V and the optical polarization $E_\perp$ or $E_{||}$. If the optical incidence angle $\theta$ is greater than $\theta_c$ (at V=0), the incident beam is reflected as beam 6a; if not, the incident beam penetrates the liquid crystal film 4, leaving through the glass prism 5 as beam 6b. Since the thicknesses of films 2, 3, 4 are each very small, the actual deviation of the exit beam 6b is very small.

Operation of the arrangement of Figure 1 further depends upon the nature of the selected liquid crystal material or composition, particularly depending upon whether it demonstrates positive or negative dielectric anisotropy. In materials with positive dielectric anisotropy, the long axes of the nematic fluid molecules generally align themselves along the applied electric field. On the other hand, in materials with negative dielectric anisotropy, the long axes generally tend to dispose themselves at right angles to the electric field vector. Infrared as well as visible and longer wave length radiation ($\lambda = 0.4$ to 2.5 microns) may be switched by apparatus according to the invention.

Figures 2A and 2B illustrate the preferred orientations of the long axes of the two types of molecules. In particular, Figure 2A illustrates the behaviour of liquid crystal molecules which display positive dielectric anisotropy ($\varepsilon_{||} - \varepsilon_\perp > 0$). Here, the ordering of the long axes of the liquid crystal molecules is homogeneous and parallel to the planes of the electrode plates 2, 3 in the y direction in the OFF STATE when the electric field is zero or, more properly, less than a threshold voltage $V_t$. Raising V well above $V_t$ produces the ON STATE with homeotropic ordering with the long axes of the liquid crystal molecules perpendicular to the electrode plates 2, 3.

Figure 2B shows the opposite behaviour of liquid crystal molecules that display negative dielectric anisoptropy ($\varepsilon_{||} - \varepsilon_{\perp} < 0$). The ordering of the long axes of the liquid crystal molecules is homeotropic and perpendicular to the planes of the electrode plates 2, 3 in the Z direction in the OFF STATE when the field is less than a threshold value $V_t$. Raising the voltage V well above the threshold value $V_t$ achieves the ON STATE with homogeneous ordering with the long axes of the molecules parallel to the planes of electrodes 2, 3 in the $\hat{y}$ direction, an ordering direction determined, by example, by 5° angle deposition of the $CaF_2$.

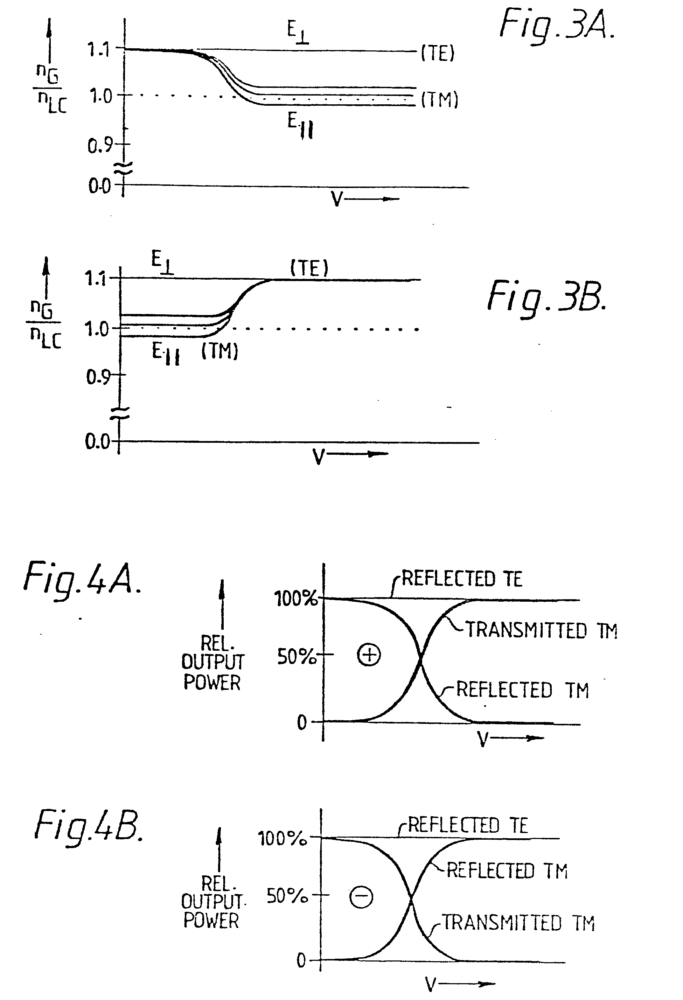

The foregoing facts determine the effective refractive index values as will be described with reference to Figures 3A and 3B. It should first be noted in connection with Figure 1 that the incoming light is normally unpolarized light which may be decomposed into orthogonal components: $E_{||}$ in the plane of incidence (the transverse magnetic or TM mode) and $E_{\perp}$ perpendicular to the plane of incidence (the transverse electric or TE mode). For positive dielectric anisotropy liquids, both the TE and TM mode waves are polarized perpendicular to the molecular long optical axes when $V < V_t$ (the OFF STATE) and both modes are affected by the ordinary index of refraction of the liquid crystal film. Above the threshold $V_t$, the liquid crystal index which affects propagation of the TM mode component rises significantly to $n_e$ because light propagation is approximately parallel to the nematic director. On the other hand, the TE mode component is completely unaffected because the light propagation direction remains orthogonal to the nematic director. Representative practical values of the ratio $n_g/n_{LC}$ are illustrated in Figure 3A, where it is assumed that $n_g$ is about ten per cent higher than $n_o$, as is often the case. As seen in Figure 3A, the perpendicular component $E_{\perp}$ is unaffected by the excitation voltage, but the parallel component $E_{||}$ has its index of refraction ratio drop significantly to about unity, the glass index being chosen to be nearly the same as $n_e$. The three different TM mode curves are for three different glass compositions.

In the case of negative dielectric anisotropy, the TM mode light is affected by an index of refraction $n_e$ in the low voltage state while light in the TE mode is affected by an index of refraction $n_o$. Then, for the higher voltage ON STATE, the refractive index becomes $n_o$ for both modes. Accordingly, as seen in Figure 3B, the TM mode light is affected by an index of refraction ratio depending upon the selected glass, of about unity in the low voltage OFF STATE and rising to 1.1 at higher voltages. The TE mode light has an unchanged index ratio of about 1.1.

Figure 1 has been drawn for the case in which the acute angle $\theta$ is slightly greater than $\theta_c$, where

$$\theta_c = \text{arc sin } (n_o/n_g).$$

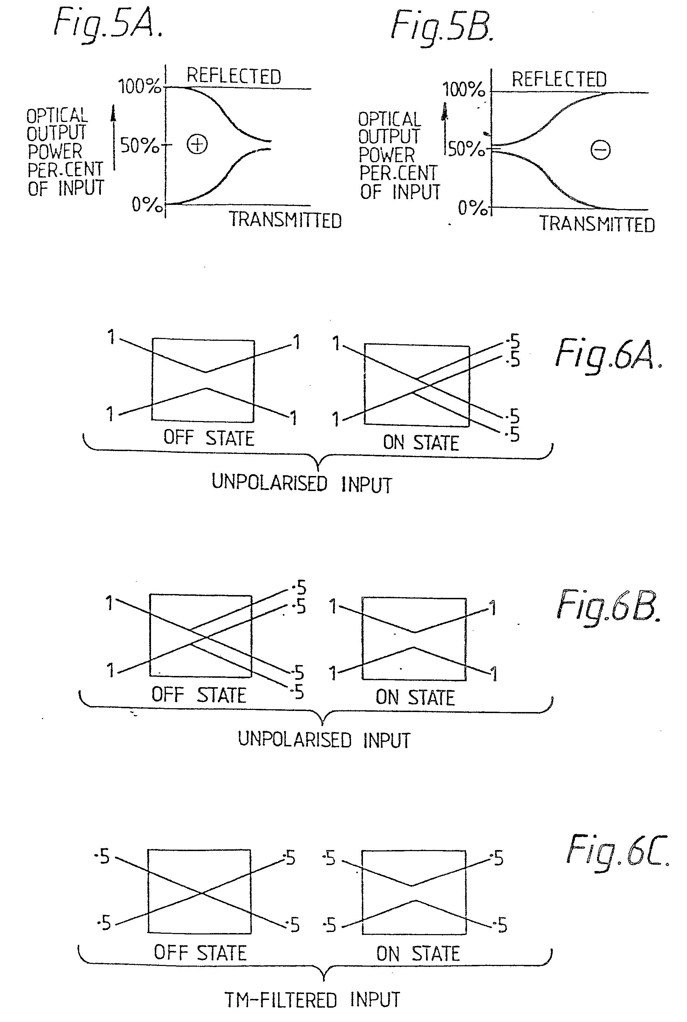

Thus, the consequences of the facts illustrated in Figures 3A and 3B on polarized light transmitted and reflected in Figure 1 are readily shown, as in Figures 4A and 4B, for the respective cases of positive and negative dielectric anisotropy materials. For best results, $n_g$ and $n_e$ are equal, although it may be shown that slight departures from this equality of about two per cent produce only a fraction of a dB insertion loss. Also to be considered are transmission losses from absorption in the electrode films 2, 3 and from light scattered in the imperfectly ordered liquid crystal film 4, but these losses are small. Power reflected, in practice, is substantially ideal for well-ordered liquid crystal materials, and transmission is close to ideal. Figures 5A and 5B represent the ideal situation for an unpolarized light input.

Figures 6A, 6B, 6C show schematically the ideal transmission and reflection behaviour consequent on the data of Figures 4A, 4B, 5A, 5B. Figures 6A and 6B show the cases for unpolarized light respectively for positive and negative dielectric anisotropy liquid crystals. Figure 6A represents operation of a positive anisotropy liquid crystal film as a binary state switch with an OFF STATE for $V < V_t$ and an ON STATE for $V > V_t$. Figure 6B represents the opposite type of operation of a negative anisotropy liquid crystal film. Thus, there are afforded a perfect OFF STATE and a perfect ON STATE or cross-over condition, the sequence depending upon the polarity of the dielectric anisotropy of the liquid crystal film used. If TE mode light is removed from the input, the conditions are those of Figure 6C, with a perfect cross-over state or OFF STATE at $V < V_t$ for negative liquids, and a perfect bar state or ON STATE at $V > V_t$ suitable for application in cross-bar switches.

Certain readily available materials are preferred for use in embodiments of the invention such as those described below, although a wide variety of other materials may be found useful. For example, there are currently many commercially available nematic liquid crystal mixtures that are insensitive to moisture and to other environmental factors. Moreoever, there are many stable liquid crystal compositions that have refractive indices well suited for use in the present invention. Suitable liquids are those of the field effect liquids, free from field-induced turbulence effects, including liquid mixtures that have not been doped to accentuate dynamic scattering. Of these,

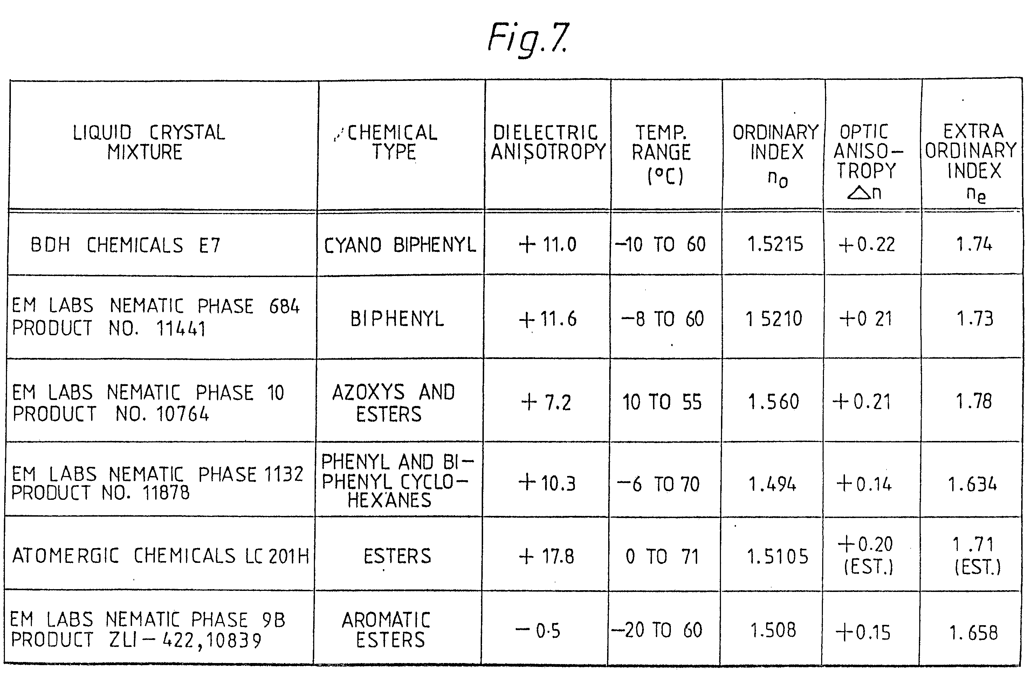

Figures 7 presents data on typical positive and negative dielectric anisotropy materials, together with their composition types, dielectric anisotropies, useful operating temperature ranges, ordinary indices $n_o$, optical anisotropies $\Delta n$ and extraordinary indices $n_e$. Such materials are supplied by the BDH Chemicals Company, Doreset, England, by the EM Laboratories, Elmsford, New York 10532, and by Atomergic Chemicals, 100 Fairchild Avenue, Plainview, New York 11803.

The suitability of the materials listed in Figure 7 was discovered in a partial search of known liquid crystal compositions. Those skilled in the art will discover additional suitable materials by extending the search in the usual manner through the large number of other known liquid crystal materials.

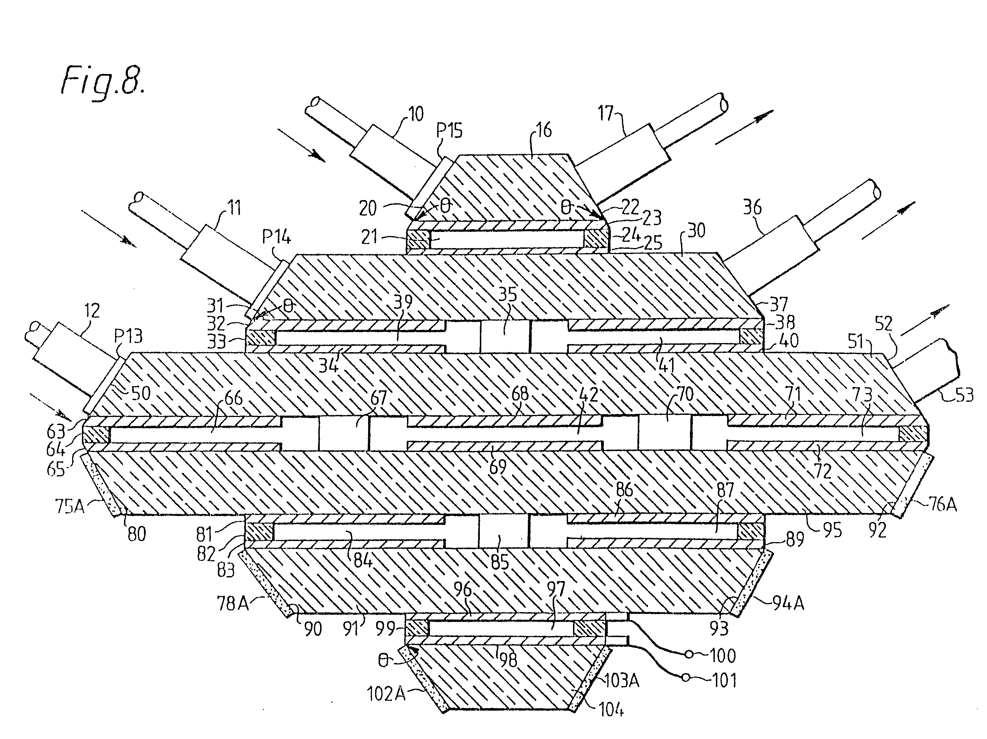

The high-index glass prisms for the Figure 8 structure, for example, may readily be made from commercially available flint glasses or other related widely available high index glasses. For instance, successful operation has been achieved using materials supplied by the Schott Glass Company, 400 York Avenue, Duryea, Pennsylvania 18642, glasses having the indicated indices of refraction at the 0.643 micron wave length: WG335 (n=1.616), WG360 (n=1.644), and WG345 (n=1.734). The EM liquid crystal product 11878 is particularly compatible with Schott's glass WG360 for use with positive anisotropy liquid crystals. The other liquid crystal materials of Figure 7 are found to be compatible for use with Schott's glass WG345, except that it is preferred to use the WG360 glass with the negative anisotropy material 10839.

Figure 8 represents an NxN optical cross-bar configuration wherein N=3. Negative anisotropy liquid crystal compositions may be used in layer thicknesses, for example, lying between 6 and 25 microns to yield an array made up, in effect, of unit cell switches of which Figure 6C is symbolic, a unit cell switch having an ideal cross-over state and a partial bar state. The 6 micron thickness is preferred for low-voltage operation.

In the cross-section of Figure 8, an upper horizontal tier defines a first electrooptically active liquid crystal light-controlling region 21 bounded by thin transparent electrodes 23, 25 and an insulative rectangular gasket or spacer tape 24. Electrode 23 is affixed to a surface of a first truncated, trapezoidal prism body 16 having upward angled faces 20, 22, while electrode 25 is affixed centrally to the upper face of a similar second, larger truncated prism body 30 having similarly upward angled faces 31, 37. The liquid crystal film may be confined by a glass wall or by a thin rectangular gasket or wall 24, for example, of a commercially available solid polymerized fluorocarbon resin, used to join, in hermetically sealed relation, the peripheries of prisms 16, 30. The wall 24 may be a tape employed in the general manner described in the R.A. Soref, M.J. Rafuse U.S. patent 3 756 694, filed September 9, 1971 for "Electric Field Controllable Birefringence Liquid Crystal Media and Optical Display Devices for Use Thereof" and assigned to Sperry Rand Corporation.

At right angles to the angled surfaces of faces 20, 22 are attached input (10) and output (17) fibre optical wave guides. The guides 10, 17 are butt sealed at normal incidence to graded index rod lenses (collimators and decollimators), the lenses being attached at normal incidence to the respective faces so that the light beam from guide 10 is incident upon the film electrode 23 at the aforementioned acute angle $\theta_p = \theta \approx 66°$ so that $\theta > \theta_c$, and the light beam may be reflected from the active liquid crystal material at the same angle $\theta$. The preferred value of $\theta$ is $\theta_c + 2°$, while the useful range of $\theta$ values lies substantially between $\theta_c + 1°$ and $\theta_c + 7°$. The minimum value of $\theta_c + 1°$ is selected in terms of the fact that switching speed is beginning to increase intolerably. On the other hand, the maximum value $\theta_c + 7°$ is established where the threshold voltage is beginning to rise significantly and the amount of switched light is decreasing seriously. For a $\theta_c$ of 65.4°, $\theta = 66°$.

The arrangement is such that the collimated light beam produced by the input fibre optic device 10 may be projected through the central electrooptically active region 21 between electrodes 23, 25 of the switch or may be deflected into the opposite or output fibre optic guide 17, depending upon the voltage imposed between electrodes 23, 25. Since it is desired that only TM mode light be passed into the switch 21 as in Figure 6C, a suitable conventional thin-film polarizer P15 is supplied between the face of guide 10 and surface 20 of prism 16 to filter out TE mode light.

The second tier of the structure is generally similar to the first or top tier, having the prism 30 with generally opposed faces 31, 37 at angle $\theta$, as shown, an input fibre guide 11 with its polarizer P14 at face 31, and an output light guide 36 at the opposite face 37. Between prism 30 and the next, and largest, prism 51, there is defined, by rectangular gasket 33, a larger separate region for accommodating liquid crystal material. This region is long enough to accommodate two distinct electrooptically active regions 39 and 41, each generally like region 21 and respectively associated with electrode pairs 32, 34, and 38, 40.

The third tier of the structure of Figure 8 has a large prism 51 with generally opposed upwardly disposed faces 50, 52, each at the acute angle $\theta$, an input fibre guide 12 with its polarizer P13 at angled face 50, and an output light guide 53 at the opposite angle face 52. Between prism 51 and the next successive prism 95, which is a prism equal in size to prism 51 but inverted with respect to it, so that it and the remaining lower tiers form substantially a mirror image of prisms 16, 30, and 51, there is located a void for containing a liquid crystal fluid. This void is defined in part by a rectangular gasket 64. The enclosed volume is the only one in the structure adapted to contain a total of three electrooptically active regions 66, 42 and 73, each generally like regions 21, 39, and 41, and respectively associated with electrode pairs 63 and 65, 68, and 69, 71 and 72. Generally, as before, electrodes 63, 68, and 71 are formed on the lower surface of prism 51, while the companion electrodes 65, 59, and 72 are affixed to the upper surface of prism 95.

A fourth tier is generally like the third tier, but prism body 95 is inverted so that the angled faces 80, 92 incline downwards, each face 80, 92 having a respective conventional light absorber 75A or 76A thereon. Between prism 95 and the next succeeding prism 91 is disposed liquid crystal material confined by rectangular gasket 82. Two sets of electrode pairs 81, 83 and 86, 69 are provided for the two optically active regions 84, 87. A fifth tier, generally like the second tier, has a prism 91 with downward angled faces 90, 93 with respective optical absorbers 78A, 94A. A single active cell 97 with an opposed electrode pair 96, 98 is enclosed by gasket 99 and a prism 104 having downward angled faces covered by optical absorbers 102A, 103A. Any selected pair of electrodes is electrically activated independently, as in the instance of the cell associated with the active region 97, by applying a suitable voltage to terminals such as terminals 100, 101.

The switching voltage may be a pulsed unipolar voltage or a gated alternating signal. Where long life operation of the liquid crystal material is important, a gated alternating voltage is elected. The alternating signal itself may be sinusoidal or may be a unipolar pulse train, the frequency generally being 500 Hz or higher to avoid pulsation of the switch output because of the finite response time of the liquid crystal material.

It will be seen that light injected at input guide 10 may be selectively reflected into output guide 17, 36, or 53 and that the same may be accomplished for light signals propagating in fbire optic guides 11 or 12. Also, the device is reciprocal. Energy not deflected at one of the several electrooptically active regions must be dissipated ultimately in absorbers 76A, 94A, or 103A. Spuriously reflected or scattered energy is absorbed by absorber elements 75A, 78A, or 102A. With 2N high-index polished glass prisms and with 2N—1 layers of nematic liquid crystal, there are $N^2$ independent control voltage sources to control the matrix switching. A set of 2N optical absorbers is used. Only N of the $N^2$ electrode pairs are addressed at any given instant of time, giving an N-fold pairing of optical inputs with outputs. Each light beam within the switching matrix is reflected only once in the matrix, and the optical insertion loss of the fully addressed matrix is therefore not substantially greater than that of a unit cell alone. Cross-talk performance is similar.

Various types of conventional fibre optic and other light guides may be used to supply the function of light guides used in this invention, such as guides 10 and 17. A collimating or decollimating fibre optic guide element is inserted in a conventional way into a plug or fitting affixed to the associated prism face. By creating and by collecting quasi-collimated light, the collimating-decollimating elements have a beneficial effect in providing lower cross-talk in the switching array. Such devices are described in the literature, including U.S. patent 3 894 789 (Kobayshi et al). The selected lens preferably has three features for use in the present invention: the lens length L is a fourth of the wave guide pitch so as to image the fibre core source at infinity, the lens numerical aperture (N.A.) is greater than the core numerical aperture, and the lens outside diameter must exceed the fibre cladding diameter. Also of interest are the arrangements of U.S. patent 4 119 362 (Holzman) and of the paper "Microlenses for Coupling Junction Lasers to Optical Fibers", Applied Optics, January 1974, page 89, by L.G. Cohen et al. Other conventional devices may be employed. Suitable devices may be purchased under the trade name Selfoc from the Nippon Sheet Glass Company, 3 New England Executive Park, Burlington, Massachusetts, specifying product SLW with L=5.2 mm., diameter=2 mm., and N.A.=0.50.

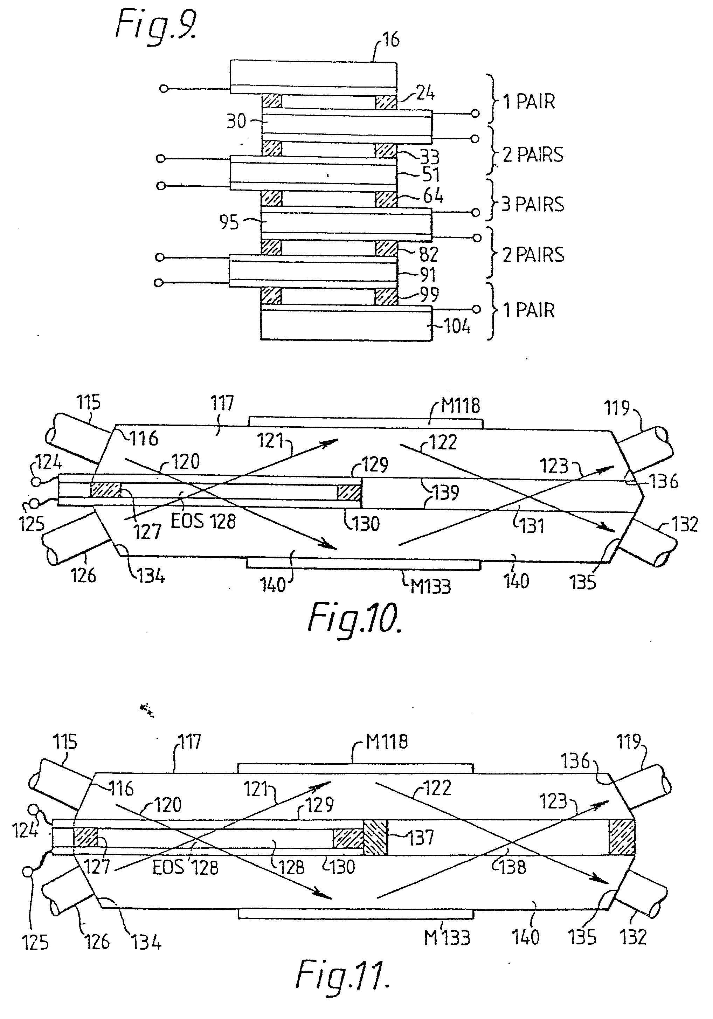

In the construction of the device of Figure 8, no unusual or complex techniques are required. In Figure 9, where only the gasket walls 24, 33, 64, 82, 99 are shown in cross section, the general disposition of the several electrodes is illustrated. The various electrode rectangles are applied to the opposed polished surfaces of the glass prisms or bodies 16, 30, 51, 95, 91, 104 by evaporation of a thin layer of metal or other material through a molybdenum mask, or by standard photolithographic methods etching of a sputtered film. The surface orientation layer may then be applied. The plates of the prisms may be overlapped as shown in the figure so that electrical leads may be readily attached to extensions of the electrodes without disturbing the liquid crystal material. In general, techniques already found useful in the liquid crystal display art find themselves useful, such as the use of spacers 35, 67, 70, 85 (see Figure 8) to assure that the volumes holding the liquid crystal composition have substantially uniform thickness, in the general manner disclosed in U.S. patent 3 834 794 (R.A. Soref).

It is readily seen that the performance of the device of Figure 8 will be superior to that achieved by electrooptical devices which employ solid materials. The addressing voltages are an order-of-magnitude lower, optical insertion loss is about 10 dB lower, and the optical extinction ratio is more than 10 dB higher with normal-incidence fibre coupling being used, rather than angled coupling. Unlike LitaO$_3$ devices that are limited to 3×3 arrays, the arrangement of Figure 8 is readily extended to arrays as large as 10×10. Several such liquid crystals matrix arrays may be replicated in side-by-side relation, monolithically in the same glass prisms.

In a switching matrix employing positive anisotropy nematic fluids, it is desirable that a cell should be used which is a modification of the Figure 8 unit cell, so that each input light beam emerges from the unit cross-point switching cell in its original direction when the switch is in its cross-over state, to permit cascading cross-points into a cross-bar array. Thus, for positive anisotropy nematic fluids (Figure 5A), an additional reflection for either of the two input light beams is provided and a pair of mirrors is used to make the two possible output light beams exchange their directions of propagation when the electrooptic switch is in its OFF STATE, substantially doubling the length of the cell. In the negative anisotropy matrix switch, only the electrooptically active region 4 is required in either the physical or the effective cell; in the positive anisotropy matrix switch, novel fail safe configurations based on those shown in Figures 10 or 11 are provided.

In Figure 10, opposed glass prisms 117, 140 are provided with oppositely angled faces ($\theta \approx 66°$) 116, 134 and 135, 136 each with respective input and output fibre optic guides 115, 126 and 119, 132 having axes perpendicular to the faces. As in the preceding figures, an electrooptically active region is formed at EOS128, being bound by rectangular gasket 127 and provided with cooperating electrodes 129, 130 for excitation by voltages applied at the respective terminals 124, 125.

As mentioned above, the second half of the extended structure utilizes conventional opposed mirrors M118, M133 on the exterior surfaces of prisms 117, 140. These mirrors reflect the original rays 120, 121 so that they reverse direction, leaving through the angled output faces 135, 136, as desired. For example, the light ray 120 from input guide 115 may be reflected by the electrooptic mirror 128 to be reflected again from the exterior mirror M118 and into output light guide 132. On the other hand, ray 120 may be allowed to pass through the liquid crystal material at EOS128 and to be reflected from the second exterior mirror M133 into the second output guide 119.

In practice, the unit cell of Figure 10 may be constructed in several ways. Prisms 117 and 140 may be separate parts affixed to an insert 131 of the same height as the liquid crystal cell EOS128. The insert 131, being made of the same materials as prisms 117 and 140, passes the light rays 122, 123 to the respective output guides 132, 119 without deviation or other disturbing effects. The contiguous glass parts, such as insert 131 and prisms 117, 140 may be fastened together in integral relation by the use of known transparent adhesives having substantially the same optical index of refraction as glass parts.

A second way of constructing the positive anisotropy cell is shown in Figure 11, where most of the reference numerals correspond to those of Figure 10. Two prisms 117 and 140 are again used, but the solid insert part 131 of Figure 10 is replaced preferably by an electrooptically inactive liquid 138 whose optical index of refraction matches the optical index of refraction of prisms 117, 140. Such liquids and mixtures of liquids are well known in the art and may be formed in well known ways. The liquid may readily be confined by an additional rectangular barrier gasket 137 of tape similar to the tape-like gasket 127 as employed in previous figures for the liquid crystal media. A third structure would be one in which the insert 131 of Figure 10 and the cooperating prisms 117, 140 are formed integrally as may readily be envisioned by removing lines 139 from Figure 10. Other structures are also possible.

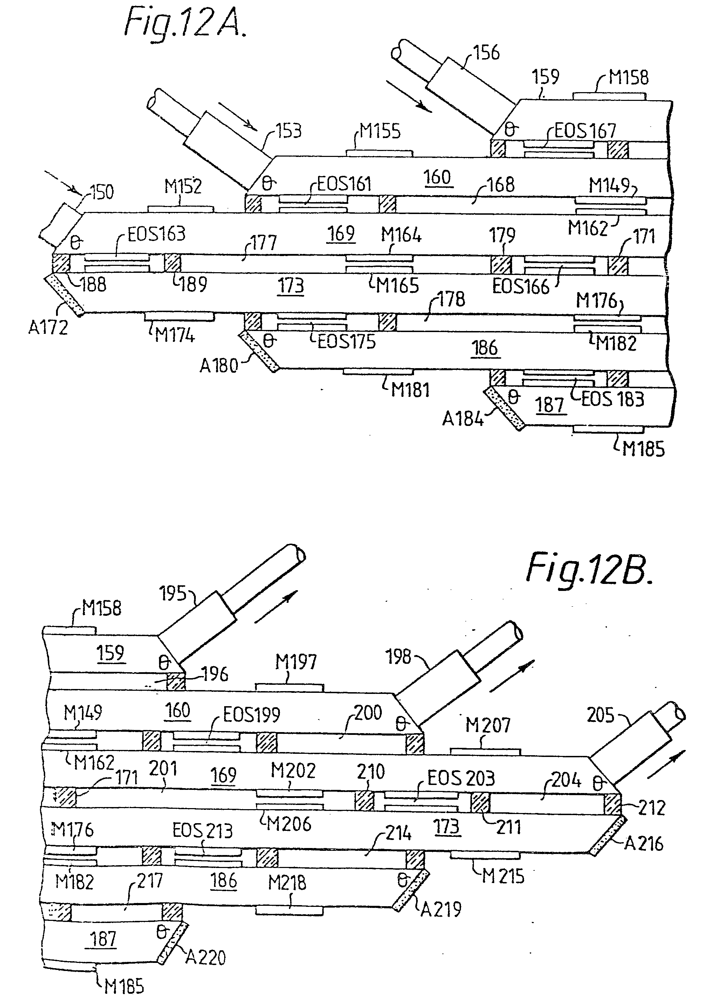

The cells of Figures 10 and 11 are also adaptable for use in switching matrices, such as in the symmetric optical matrix of Figures 12A, 12B. As in the device of Figure 8, that of Figures 12A, 12B is constructed in six tiers about prisms 159, 160, 169, 173, 186, and 187. The first or upper tier includes an input guide 156 perpendicular to an angled input face of prism 159. Centrally located on the exterior extended surface of prism 159 is a conventional reflecting film or mirror M158 with a companion mirror M149 on the lower face of prism 160. Opposite input guide 156 is an output optical guide 195 disposed on a second upwardly angled face of prism 159. Between the lower face of prism 159 and a second and longer prism body 160 is an electrooptically active region EOS167 and a region 196 with transparent material, liquid or solid, having the same optical index as prism 159.

The second tier of the device includes an input guide 153 whose axis is perpendicular to an angled input face of prism 160. At the opposed upward angled end of prism 160 is an associated upwardly angled output light guide 198. Symmetrically located external mirrors M155 and M197 on the upper surface of prism 160 adjacent the respective optical guides 153, 198. Between prisms 160 and 169 are, in succession a first set of electrodes for defining an electrooptically active region EOS161, a first volume 168 having the same index of refraction as prism 159 and including fixed mirrors M149, M162, a second set of electrodes for defining a second electrooptically active region EOS199, and a second volume 200 again having an optical index of refraction equal to that of prism 159. It will, of course, be understood that back-to-back mirrors such as mirrors M149 and M162 are each substantially 100 per cent reflecting, so that a light flow path through the mirrors is forbidden.

The third tier of the device includes an input guide 150 whose axis is perpendicular to an upwardly angled input face of the large prism 169. At the opposed upward angled face of prism 169 is an associated output light guide 205. Symmetrically placed on the exterior free surface of prism 169 adjacent light guides 150, 205 are the respective mirrors M152 and M207. Occupying the total region between the two equal length prisms 169, 173 are a first electrooptic switch EOS163, a volume 177 having the index of refraction of prism 159 and including a set of fixed mirror films M164, M165, a second electrooptically active liquid crystal switch EOS166, a further region 201 having an optical index of refraction equal to that of prism 159 and including a pair of fixed mirrors M202 and M206, a further electrooptically active liquid crystal region EOS203, and a final region 204 of optical refractive index equal to the optical refractive index of prism 159.

The basic structure associated with the fourth, fifth, and sixth tiers of Figure 12A, 12B is a mirror image of the structure so far described, with the major change that each angled end of the three prisms 173, 186, 187 is supplied with an optical absorber, rather than with an input or output light guide. For example, the angled ends of prism 173 have respective optical absorbers A172 and A216, those of prism 186 have respective absorbers A180 and S219, and those of the prism 187 have absorbers A184 and A220. Prism 173 has external mirrors M174 and M215 analogous to mirrors M152 and M207. Prism 186 has external mirrors M181 and M218 analogous to the mirrors M155 and M197 of prism 159. Further, the small, outer prism 187 has a single central mirror M185 analogous to mirror 158 of prism 159. The region between prisms 173 and 186, analogous to that between prisms 160 and 169, has an electrooptically active switching region EOS175, an inactive region 178 with a pair of fixed mirrors M176, M182, a second electrooptic swtiching region EOS213, and a second transparent but inactive region 214. The arrangement in the volume between the last two prisms 186, 187 is again like that between prisms 159, 160, there being provided an electrooptically active region EOS183 and an inactive transparent region 217.

It will be understood that each of the electrooptic switch regions EOS161, —163, —166, —167, —175, —183, —199, —203, and —213 contains a suitable liquid crystal material, electrically excitable by leads not shown in the figure so as to simplify the drawing, and suitably confined between the several prisms by planar gaskets whose nature will be obvious to those skilled in the art. The figure is intended to show regions 168, 177, 178, 196, 200, 201, 204, 214, and 217 filled with a transparent material having the same index of refraction as prism 159 and the several other prisms. If a liquid, rather than a solid, is used for the latter purpose, it will be confined by cross pieces of the gasket in a manner that will be obvious to those skilled in the art. Refer to the region between prisms 169 and 173, for example, gasket arm 188 prevents the nematic material from leaking out of the device, and gasket arms 189, 179, 171, 210 and 211 prevent mixing of the nematic and electroopitcally inactive liquids, while gasket arm 212 again prevents leakage of the inactive fluid to the exterior. Evidently, if a solid material whose index matches prism 159 were to be substituted for the electrooptically inactive liquid, some of the gasket arms may be eliminated. It will be understood with respect to Figures 12A and 12B, as in the other figures in this case, that the scales and dimensions employed are not necessarily the scales or dimensions that would be employed in practice. In particular, the thicknesses of the transparent electrodes, fixed mirrors, and liquid crystal layers are exaggerated for the purpose of making the drawings clear.

It will be understood that light signals injected at input guide 156 may be selectively reflected into output guides 195, 198, or 205 and that the same may be accomplished for light signals propagating in input fibre optic guides 150 or 153. As in the case of the apparatus of Figure 8, operation the device of Figures 12A, 12B obeys the reciprocity theorem. Energy not re-directed into an output guide or scattered is ultimately absorbed in one of the absorbers A172, A180, A184, A216, A219, or A220. As in Figure 8, only N of $N^2$ independent electrode pairs are turned on at any one instant; rules of operation analogous to those for Figure 8 also apply.

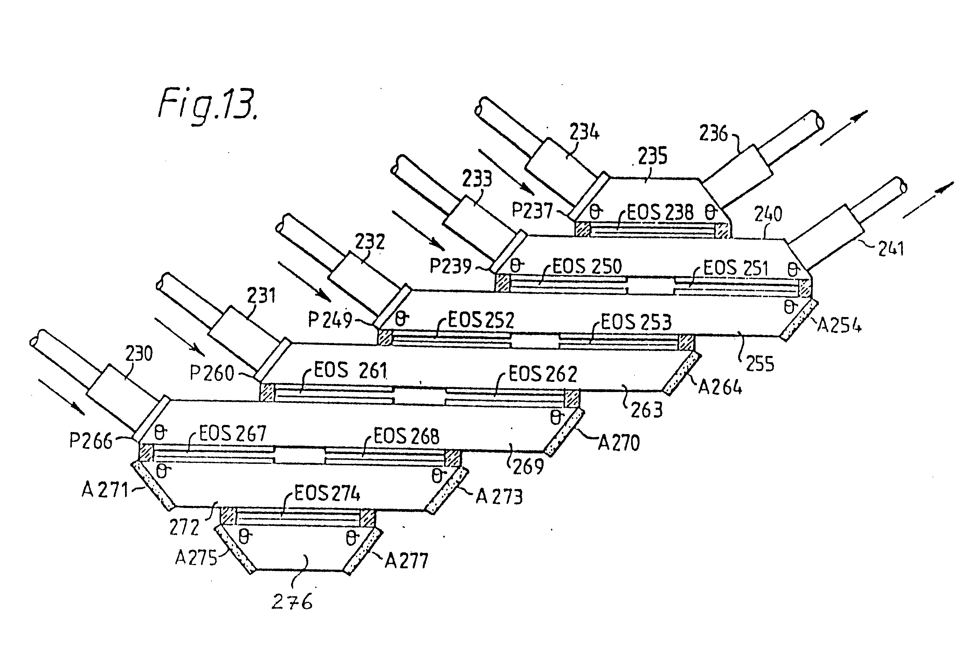

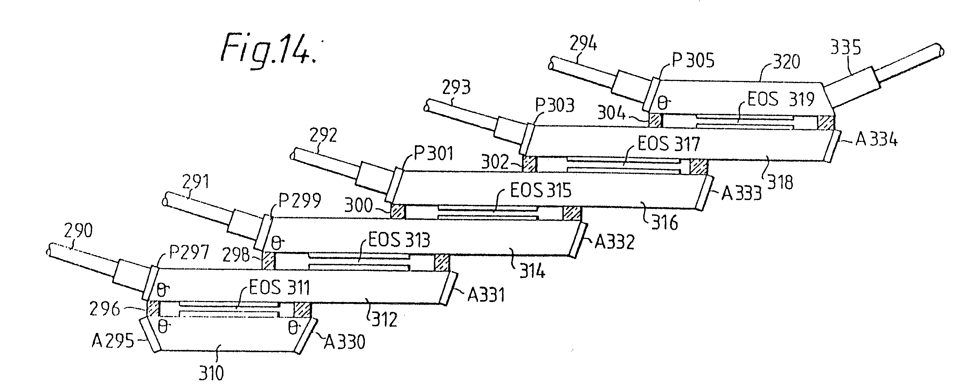

The switching matrices of Figures 8 and 12A, 12B demonstrate two types of geometric symmetry; however, switching matrices according to the present invention may also be readily constructed that do not have such types of symmetry as, for example, the matrices shown in Figures 13 and 14. These devices employ negative anisotropy liquid crystals and may take the form of N>M or of N<M matrices; Figure 13 illustrates a practical 5×2 matrix which, of course, may be operated as a 2×5 matrix since the reciprocity theorem applies. Unit cells generally similar to those of Figure 10 or 11 are again employed but which have three specifically different configurations.

In Figure 13, a first (upper) tier is employed substantially like that of Figure 8, it comprising a first electrooptically active liquid crystal light switching region EOS238 bounded between parallel adjacent surfaces of prisms 235, 240 of an array of prisms and made active by the use of thin transparent electrodes, such as are disclosed in Figure 8, and further bounded by a generally rectangular insulative gasket. The upper tier again includes an input fibre optic guide 234, the prism 235 having end faces at the angle $\theta$ with respect to the associated electrode plane, a polarizer P237 between input guide 234 and the angled prism face, and an output fibre guide 236 again butt-sealed to the second angled face of prism 235.

Prism 235 of the device of Figure 13 is affixed centrally on the upper surface of a second and longer prism 240 of the second tier of the device, prism 240 having end faces parallel to the respective end faces of prism 235; the input end face of prism 240 has a polarizer P239 and an input fibre guide 233 while the output end face of prism 240 has an output fibre guide 241. Placed symmetrically between prisms 240 and 255 is a liquid crystal volume having two electrooptically active switching devices EOS250 and EOS251, symmetrically situated with respect to the base of prism 240.

In the third tier of the device of Figure 13, a third type of prism 255 is introduced, longer than prism 240, and having parallel input and output faces that are, in turn, parallel only to the input face of prism 240. To the input face of prism 255 is attached an input fibre guide 232 with an associated polarizer P249; to its output face is affixed an optical absorber A254. Between prisms 255 and 263 are a pair of liquid crystal electrically active switching regions EOS252 and EOS253, displaced relative to the locations of active regions EOS250 and EOS251.

The fourth and fifth tiers are generally similar to those associated with prism 255. For example, the fourth tier has an input 231, polarizer P260, prism 263, absorber A264, and separately controllable electrooptic switching regions EOS261 and EOS262. In an analogous structure, the fifth tier includes an input 230, polarizer P266, prism 269, absorber 270, and separately controlled electrooptical regions EOS267 and EOS268.

The sixth tier is similar to the second tier, but is inverted, and its downwardly angled ends are covered by respective optical absorbers A271 and A273. At its central lower surface is a symmetrically placed liquid crystal cell EOS274 which is thus disposed between prisms 272 and 276. The last tier is formed of the prism 276 with absorbers A275, A277 at its downwardly angled ends. Prism 276 is similar to prism 235, but is inverted.

If there is light present in any one of input guides 230 through 234, and if no electrooptic switch is caused to be reflective, the light passes through those elements to be absorbed in one or more of the absorbers A254, A264, A270, A273, or A277. If one of the electrooptic switches EOS238, EOS250, EOS252, EOS261 or EOS267 is active (reflecting), its light will pass to output guide 236. If light passes through one of the foregoing switches, activation of the appropriate switch of the series EOS251, EOS253, EOS262, EOS268, or EOS274 will permit it to reach output 241. The number of glass prisms in N+M and the number of liquid crystal layers is N+M—1.

Figure 14 illustrates a further asymmetric form of the invention for use with negative anisotropy liquid crystal switches and where M=5 and N=1. Its upper tier, like that of Figure 13, has a relatively short prism 320 with ends slanted oppositely at angle $\theta$, the prism being offset with respect to the next prism 318, as illustrated. The input slanted face of the trapezoidal prism 320 includes a polarizer P305 between the face and the input fibre optic guide 294. On the opposed slanted face is an output guide 335. Bounded within a gasket 304 and adjacent faces of prisms 318, 320 is an electroactive liquid crystal switching element EOS319 with opposed transparent electrodes that may be electrically excited as previously discussed.

A second tier of the embodiment uses the longer prism 318 having parallel ends at the angle $\theta$ to the horizontal in the drawing. The input end of prism 318 includes a polarizer P303 and an input guide 293; its output end has an absorber A334. Between Prisms 318 and 316 is an electrooptical switch, EOS317 of liquid crystal material partly contained by gasket 302. The third, fourth, and fifth tiers are similar to the tier involving prism 318. For example, prisms 316, 314, 312 are like prism 318, having parallel ends. They are respectively equipped with input guides 292, 291, 290 and associated respective polarizers P301, P299, P297. The opposed parallel ends of prisms 316, 314, 312 are supplied with respective absorbers A333, A332, A331. Respective gaskets 302, 300, 298 enclose nematic material forming, as previously described, electrooptic switches EOS317, EOS315, EOS313.

The structure is completed by a prism 310 which may be somewhat shorter than the first tier prism 320 and is inverted with respect to the other prisms. It, together with gasket 296, defines a final liquid crystal device EOS311, having voltage controllable transparent plates, but being equipped with a pair of absorbers A295, A330 at its opposed ends. Flow of energy through this 5×1 switch may be reversed, if desired, so that a 1×5 matrix results. The number of glass pieces is again N+M and the number of nematic layers N+1—1.

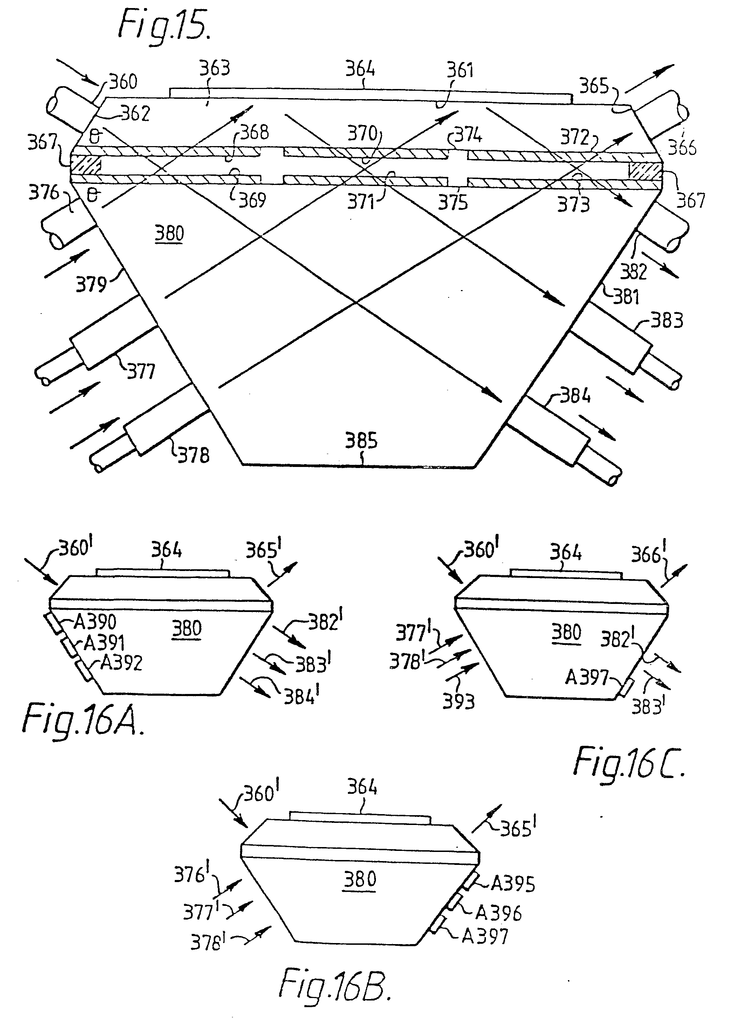

Certain forms of the invention advantageously provide multiport matrix switching with only one or two positive anisotropy liquid crystal layers. For example, the economical symmetric structure shown in Figure 15 employs only one such electrooptically active layer sandwhiched between two different prisms 363 and 380. The smaller or upper prisms 363 includes the usual input fibre guide 360 affixed in perpendicular relation to the upwardly slanted input face 362 of the prism 363, face 362 again lying at an angle $\theta$ with respect to the surface 361 of prism 363. The opposite angled face 365 of prism 363 is equipped with an output fibre guide 366 and its upper face 361 carries a mirror 364. Prism 380 is also symmetric, having respective opposed input and output faces 379 and 381 disposed at angles $\theta$ with respect to its parallel faces 375 and 385. The angled side 379 is equipped with three input light guides 376, 377, 378, while its second or output side has output guides 382, 383, 384, all disposed in perpendicular relation with respect to the associated angled faces. The prims 363, 380 are separated by continuous rectangular gasket 367, as in the previously described forms of the invention, for containing a suitable negative anisotropy liquid crystal material. Contiguous with the liquid crystal material, the face 374 of prism 363 has three normally similar optically transparent electrodes 368, 370, 372, while the face 375 of prism 380 has three optically transparent electrodes 369, 371, 373 respectively disposed in opposition to electrodes 368, 370, 372. As in the prior structures, each electrode is supplied with a conductive lead for electrical excitation.

It is readily seen that light signals in inputs 360 or 376 may be selectively directed to either of output guides 382, 383, 344, depending upon the selected actuation of the three electrooptic switches. Similarly, light entering input 377 may be selectively directed to outputs 366, 382, or 383. Light entering input 378 may be selectively directed to outputs 366 or 382.

The versatile matrix of Figure 15 is seen to use multiple internal reflections from the surface mirror 364 of trapezoidal prism 363 to afford access to pluralities of insertion and tap-off ports. In this configuration, relatively few reflections of a given input light beam are required, either from the fixed mirror 364 or from the electrooptically active mirrors. In effect, the liquid crystal layer behaves like an optical bus, the electroded areas furnishing active reflection or transmission areas at which the light signal may be selectively put on the effective bus or extracted from it.

Further illustrating the versatility of the general structure shown in Figure 15, Figures 16A, 16B, and 16C demonstrate how input and output guides may be arranged to produce alternative results; in these figures, the primed reference numerals represent functions performed by similarly numbered elements in Figure 15. For example, Figure 16A shows that a light input 360' may be selectively directed to form outputs 365', 382', 383', or 384' in a structure in which absorbers A390, A391, A392 respectively replace input guides 376, 377, 378. In Figure 16B is shown a geometry reversed with respect to that of Figure 16A and having output guides 382, 383, 384 replaced by optical absorbers A395, A396, A397. By selective operation of the switches shown in Figures 15, optical input signals represented by arrows 360', 376', 377', or 378' may be directed to an output 365'. In Figure 16C, input light beams 370', 377', 378', or 393' supply selective outputs as represented by arrows 366', 382', 383'. Reciprocal operation is readily achieved.

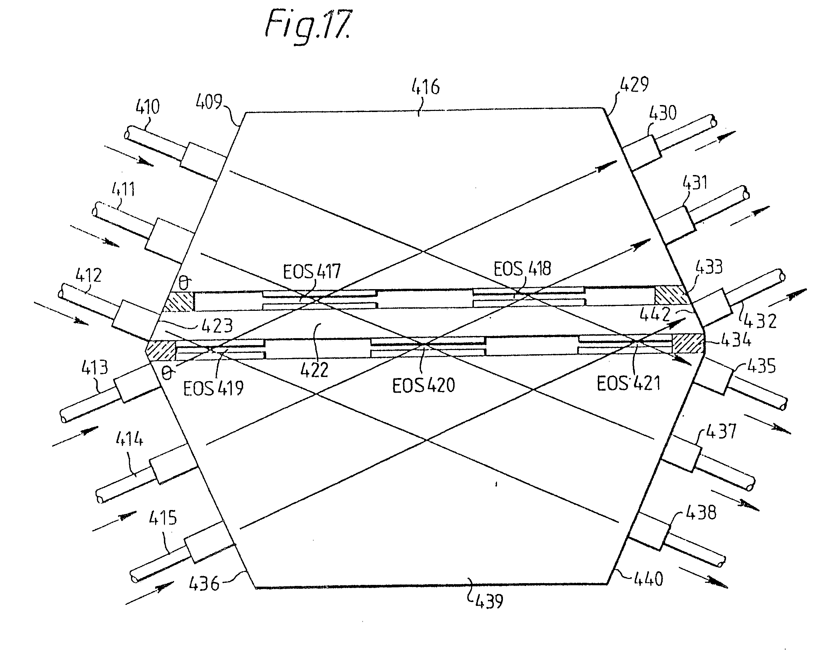

The multiport switch of Figure 17 provides switching using dual electrooptically active layers containing positive anisotropy liquid crystal materials. A first tier of the matrix employs a trapezoidal prism 416 with faces 409, 429 slanted at angle $\theta$ with respect to its parallel sides. Face 409 is an input surface, having input guides 410 and 411, while face 429 supports output guides 430 and 431. Disposed between prism 416 and the relatively thin prism 422 is a pair of electrooptically active regions EOS417, EOS418 provided with the usual electrodes, the liquid crystal material being held within the structure by a continous gasket 433.

Forming the second tier of the device is the thin trapezoidal prism 422 having faces 423 and 442 respectively co-planar with faces 409 and 429 of prism 416. The angled face 423 is equipped with an input guide 412, while the angled face 442 of prism 422 is supplied with an output fibre optic guide 432. Disposed between prism 422 and the second relatively large trapezoidal prism 439 are three electrooptically active switching regions EOS419, EOS420, and EOS421, also provided with the usual electrodes. The liquid crystal material is held in those active regions by a continuous gasket 434.

In the third tier of the device, the large trapezoidal prism 439 has downward looking faces 436, 440. Face 436 lies at angle $\theta$ with respect to parallel surfaces of prism 439 and cooperates with fibre optic inputs 413, 414, 415 abutting face 436 in perpendicular relation. Face 440 is disposed as shown in the drawing and cooperates with fibre optic output guides 435, 437, 438. Here, depending upon the selection of the excitation of the five electrooptic switches, light signals may be propagated:

| FROM | THROUGH |
|------|---------|
| guide 410 — | guides 431, 432, or 435 |
| guide 411 — | guides 430, 431, 432, 435, 437 |
| guide 412 — | guides 430, 431, 432, 435, 437, 438, |
| guide 413 — | guides 430, 431, 432, 435, 437, 438, |
| guide 414 — | guides 431, 432, 435, 437, and |
| guide 415 — | guides 432, 435. |

Any of these paths may be allowed or appropriate ones may be forbidden depending upon how the programming is selected, whether manual or automatic. For example, paths requiring transmission through more than one liquid crystal switch may be prohibited, if desired. In general, the dual layer device of Figure 17 behaves like an optical bus where light signals may either be added or removed at successive points along that bus. Each interaction at each electrooptic switch location can be made totally reflective or fifty per cent transmissive for unpolarized light. This simple, low-voltage matrix switch has high cross-talk immunity and an insertion loss (ideally of 3 dB. for each output port including a traversal across one liquid crystal cell), acceptable in many applications. For example, the insertion loss for $V=0$ from guide 412 to guide 432 can in principle be less than 0.5 dB.

### Claims

1. An electro-optical switching device with a light controlling region (21, 39, 41, ...) comprising a layer of nematic liquid crystal material, contained between two transparent electrodes, (23, 25; 32, 34) which electrodes are disposed on adjacent parallel faces of two prisms (16, 30, ...) with trapezoidal cross section and with end-faces (20, 22; 21, 37) which are inclined at such an angle $\theta$, that the TM mode of an optical signal passing at a right angle through one of said end-faces into one of said prisms is either totally internally reflected at the surface of said layer of nematic liquid crystal material or transmitted by said layer in response to a voltage applied to said electrodes, characterised in that at least some of said end-faces of said prisms are each coupled to a single-strand optic fibre by a collimator or a decollimator, so as to form an input light guide (10, 11, 12, ...) or an output light guide (17, 36, 53, ...) and in that one or more of said light controlling regions (21, 39, 41, ...) are arranged at such a position or positions that said optical signals can be selectively switched from input light guides to output light guides.

2. An electro-optical switching device according to claim 1 further characterised in that end-faces (80, 92) of prisms (95) not coupled to light guides are provided with light absorbers (75A, 76A).

3. An electro-optical switching device according to claim 1 or claim 2 characterised in that the angle $\theta$ lies between $\theta_c+1$ and $\theta_c+7$ where $\theta_c$ is the critical angle of total internal reflection for the prism/liquid crystal interface.

4. An electrooptical switching device according to any preceding claim in which polarisers (P13, P14, P15) are provided at the input light guides to pass only TM mode light.

5. An electro-optical switching device according to any preceding claim having an inactive region (138, Fig. 11) between the parallel faces of consecutive prisms (117, 140) containing a liquid of similar refractive index to that of the prisms to permit light to pass through undeviated.

6. An electro-optical switching device according to any preceding claim in which the crystal layer is of positive anistropy nematic liquid crystal material and the parallel faces of the prisms (117, 140) are provided with mirror surfaces (M118, M133) to reflect light signals.

### Revendications

1. Dispositif de commutation électro-optique qui comporte une zone de réglage de lumière (21, 39, 41, ...) comprenant une couche de cristaux liquides nématiques, disposée entre deux électrodes transparentes (23, 25; 32, 34), ces électrodes étant placées sur des faces parallèles adjacentes de deux prismes (16, 30, ...) ayant des sections transversales trapézoïdales et des faces d'extrémités (20, 22; 21, 37) qui sont inclinées selon un angle $\theta$ tel que le mode MT (magnétique transversal) d'un signal optique traversant selon un angle droit l'une desdites faces d'extrémitè de l'un desdits prismes est soit totalement réfléchi intérieurement à la surface de ladite couche de cristaux liquides nématiques soit transmis par ladite couche en réponse à une tension électrique appliquée auxdites électrodes, caractérisé en ce qu'au moins certaines desdites faces d'extrémité desdits prismes sont chacune couplée à une fibre optique mono-filament par un collimateur ou un décollimateur de façon à former un conduit d'entrée de lumière (10, 11, 12, ...) ou un conduit de sortie de lumière (17, 36, 53, ...) et en ce qu'une ou plusieurs desdites zones de réglage de lumière (21, 39, 41, ...) sont disposées dans une ou des positions telles que lesdits signaux optiques peuvent être sélectivement commutés des conduits d'entrée de lumière aux conduits de sortie de lumière.

2. Dispositif de commutation électro-optique selon la revendication 1, caractérisé en outre en ce que les faces d'extrémités (80, 92) des prismes (95), qui ne sont pas couplées aux conduits de lumière comportent des absorbeurs de lumière (75A, 76A).

3. Dispositif de commutation électro-optique selon la revendication 1 ou la revendication 2, caractérisé en ce que l'angle $\theta$ est compris entre $\theta_c+1$ et $\theta_c+7$, $\theta_c$ étant l'angle critique de réflexion interne totale pour l'interface prisme/cristaux liquides.

4. Dispositif de commutation électro-optique selon l'une quelconque des revendications précédentes, dans lequel des polarisuers (P13, P14, P15) sont prévus sur les conduits d'entrée de lumière pour permettre seulement un passage de la lumière en mode MT.

5. Dispositif de commutation électro-optique selon l'une quelconque des revendications précédentes, comportant une zone inactive (138, Fig. 11) entre les faces parallèles de prismes consécutifs (117, 140), renfermant un liquide d'indice de réfraction similaire à celui des prismes pour permettre à la lumière de la traverser sans être déviée.

6. Dispositif de commutation électro-optique selon l'une quelconque des revendications précédentes, dans lequel la couche de cristaux est constituée de cristaux liquides nématiques à anisotropie positive et les faces parallèles des prismes (117, 140) sont munies de surfaces à miroir (M118, M133) pour réfléchir des signaux de lumière.

**Patentansprüche**

1. Elektrooptisches Schaltgerät mit einem das Licht beeinflussenden Bereich (21, 39, 41, ...) aus einer zwischen zwei durchsichtigen Elektroden (23, 25; 32, 34) festgehaltenen Schicht eines flüssigen Kristalls von nematischer Struktur, bei dem die Elektroden an benachbarten, parallelen Flächen zweier Prismen (16, 30, ...) mit trapezförmigem Querschnitt und mit unter einem solchen Winkel $\theta$ geneigten Endflächen (20, 22; 21, 37) angeordnet sind, daß die in der Einfallsebene polarisierte Komponente $E_{||}$ eines unter einem rechten Winkel durch eine der Endflächen hindurchgehenden, in eines der Prismen hineinlaufenden optischen Signals entweder an der Oberfläche der Schicht aus dem flüssigen Kristall von nematischer Struktur einer inneren Totalreflexion unterliegt oder entsprechend einer an den Elektroden angelegten elektrischen Spannung von dieser Schicht hindurchgelassen wird, dadurch gekennzeichnet, daß zumindest einige Endflächen der Prismen jeweils durch einen Kollimator oder Dekollimator mit einer einstückigen optischen Faser gekoppelt sind, um einen Enlaßlichtleiter (10, 11, 12, ...) oder einen Auslaßlichtleiter (17, 36, 53) zu bilden, und daß einer oder mehrere has Licht beeinflussende Bereiche (21, 39, 41, ...) in einer solchen Position angeordnet sind, daß die optischen Signale wahlweise von den Einlaße lichtleitern zu den Auslaßlichtleitern geschaltet werden können.

2. Elektrooptisches Schaltergerät nach dem Anspruch 1 oder 2, dadurch gekennzeichnet, daß die nicht mit den Lichtleitern gekoppelten Endflächen (80, 92) der Prismen (95) mit Lichtabsorbern (75A, 76A) versehen sind.

3. Elektrooptisches Schaltgerät nach dem Anspruch 1 oder 2, dadurch gekennzeichnet, daß der Winkel $\theta$ zwischen $\theta_c+1$ und $\theta_c+7$ liegt, wobei $\theta_c$ den kritischen Winkel der inneren Totalreflexion für die Grenzfläche zwischen dem Prisma und flüssigen Kristall bedeutet.

4. Elektrooptisches Schaltgerät nach einem vorhergehenden Anspruch, bei dem an den Einlaßlichtleitern Polarisatoren (P13, P14, P15) vorgesehen sind, un mur die in der Einfallsebene polarisierte Komponente $E_{||}$ des Lichtes hindurchgehen zu lassen.

5. Elektrooptisches Schaltgerät nach einem vorhergehenden Anspruch mit einem inaktiven Bereich (138, Fig. 11) zwischen den parallelen Flächen aufeinanderfolgender Prismen (117, 140) die eine Flüssigkeit mit einem ähnlichen Brechungsindex wie dem der Prismen festhalten, un das Licht unabgelenkt hindurchgehen zu lassen.

6. Elektrooptisches Schaltegerät nach einem vorhergehenden Anspruch, bei dem die Kristallschicht ein flüssiger Kristall von nematischer Struktur und positiver Anisotropie ist und die parallelen Flächen der Prismen (117, 140), die eine Flüssigkeit mit einem ähnlichen Reflektieren der Lichtsignale versehen sind.

0 0 1 5 1 3 9

Fig.1.

INCIDENT

INCIDENT

$E_{11}$

$E_{\perp}$

REFLECTED RAY

GLASS $n_G$

LIQUID CRYSTAL $n_{LC}$

GLASS $n_G$

TRANSMITTED RAY

Fig.2A.

+ OFF STATE $V < V_t$

ON STATE $V > V_t$

DIELECTRIC ANISOTROPY OR $\epsilon_{11} - \epsilon_{\perp} > 0$

Fig.2B.

OFF STATE $V < V_t$

ON STATE $V > V_t$

DIELECTRIC ANISOTROPY OR $\epsilon_{11} - \epsilon_{\perp} < 0$

Fig.3A.

Fig.3B.

Fig.4A.

Fig.4B.

*Fig.5A.*

OPTICAL OUTPUT POWER PER.CENT OF INPUT

REFLECTED

100%

50% ⊕

0%

TRANSMITTED

*Fig.5B.*

OPTICAL OUTPUT POWER PER.CENT OF INPUT

REFLECTED

100%

50% ⊖

0%

TRANSMITTED

OFF STATE        ON STATE

UNPOLARISED INPUT

*Fig.6A.*

OFF STATE        ON STATE

UNPOLARISED INPUT

*Fig.6B.*

OFF STATE        ON STATE

TM-FILTERED INPUT

*Fig.6C.*

3

## Fig.7

| LIQUID CRYSTAL MIXTURE | CHEMICAL TYPE | DIELECTRIC ANISOTROPY | TEMP. RANGE (°C) | ORDINARY INDEX $n_o$ | OPTIC ANISO-TROPY $\triangle n$ | EXTRA ORDINARY INDEX $n_e$ |
|---|---|---|---|---|---|---|
| BDH CHEMICALS E7 | CYANO BIPHENYL | + 11.0 | −10 TO 60 | 1.5215 | +0.22 | 1.74 |
| EM LABS NEMATIC PHASE 684 PRODUCT NO. 11441 | BIPHENYL | + 11.6 | −8 TO 60 | 1 5210 | +0 21 | 1.73 |
| EM LABS NEMATIC PHASE 10 PRODUCT NO. 10764 | AZOXYS AND ESTERS | + 7.2 | 10 TO 55 | 1.560 | +0.21 | 1.78 |
| EM LABS NEMATIC PHASE 1132 PRODUCT NO. 11878 | PHENYL AND BI-PHENYL CYCLO-HEXANES | +10.3 | −6 TO 70 | 1.494 | +0.14 | 1.634 |
| ATOMERGIC CHEMICALS LC 201H | ESTERS | + 17.8 | 0 TO 71 | 1.5105 | +0.20 (EST.) | 1 .71 (EST.) |
| EM LABS NEMATIC PHASE 9B PRODUCT ZLI − 422,10839 | AROMATIC ESTERS | − 0·5 | −20 TO 60 | 1.508 | +0.15 | 1.658 |

0015 139

Fig.8.

## Fig.9.

1 PAIR
2 PAIRS
3 PAIRS
2 PAIRS
1 PAIR

## Fig.10.

## Fig.11.

## Fig.12A.

## Fig.12B.

Fig.13.

EOS 238
EOS 250    EOS 251
EOS 252    EOS 253
EOS 261    EOS 262
EOS 267    EOS 268
EOS 274

P237
P239
P249
P260
P266

230  231  232  233  234  235  236
240
241

A254
A264
A270
A271  A273
A275  A277

255
263
269
272
276

0015139

8

Fig.14.

Fig.15.

Fig.16A.

Fig.16C.

Fig.16B.

*Fig.17.*